# FASCICULE DE BREVET EUROPEEN

(11) **EP 3 547 203 B1**
(45) Date de publication et mention de la délivrance du brevet: **16.12.2020**
(21) Numéro de dépôt: 19164941.7
(22) Date de dépôt: 25.03.2019
(51) Int. Cl.: G06F 21/62, G06F 21/33

(54) **MÉTHODE ET SYSTÈME DE GESTION D'ACCÈS À DES DONNÉES PERSONNELLES AU MOYEN D'UN CONTRAT INTELLIGENT**
METHODE UND SYSTEM FÜR DIE ZUGRIFFSVERWALTUNG VON PERSONENBEZOGENEN DATEN MITHILFE EINES INTELLIGENTEN VERTRAGS
METHOD AND SYSTEM FOR MANAGING ACCESS TO PERSONAL DATA BY MEANS OF AN INTELLIGENT CONTRACT

(30) Priorité: 26.03.2018 FR 1852585
(43) Date de publication de la demande: 02.10.2019
(73) Titulaire: Commissariat à l'énergie atomique et aux énergies alternatives, 75015 Paris (FR)
(72) Inventeur: HENNEBERT, Christine, 38054 Grenoble Cedex 9 (FR); DUCREUX, Laurent-Frédéric, 38054 Grenoble Cedex 9 (FR); VOLAT, Matthieu, 38054 Grenoble Cedex 9 (FR)
(74) Mandataire: Brevalex

(56) Documents cités:
- WO-A1-2018/019364
- CN-A- 107 682 331
- US-A1- 2018 060 496

## Description

### DOMAINE TECHNIQUE

La présente invention concerne de manière générale la gestion d'accès à des données personnelles, telles que celles issues d'objets connectés. Elle concerne également le domaine des chaines de blocs (*blockchains*) et plus particulièrement celles qui permettent d'exécuter des contrats intelligents (*smart contracts*).

### ÉTAT DE LA TECHNIQUE ANTÉRIEURE

La gestion des droits d'accès dans un système d'information revêt une importance critique, récemment accentuée par la perspective de l'entrée en application prochaine du Règlement Général de la Protection des Données (RGPD) 2016/679 dans l'UE.

Le Règlement RGPD (art. 25) requiert notamment que des mesures techniques soient prises dès la conception du système d'information pour garantir la protection des données personnelles et la restriction de leur accès selon la finalité spécifique de chaque traitement.

En particulier, il est nécessaire de protéger l'accès à des données qui pourraient révéler le comportement ou les habitudes de vie d'un utilisateur donné. Ainsi, par exemple, les données collectées par un réseau de capteurs destinés à mesurer la consommation électrique et/ou la consommation en eau d'un usager d'un système IoT (*Internet of Things*) pourraient trahir ses horaires de présence à son domicile et rendre ce dernier plus vulnérable aux intrusions.

Différentes méthodes peuvent être utilisées pour protéger les données personnelles et respecter la vie privée des utilisateurs (*privacy*). On peut notamment citer l'anonymisation des données, consistant à stocker et, le cas échéant, traiter des données personnelles sans possibilité d'identifier la personne à qui appartiennent ces données, et la confidentialité des données, réalisée par chiffrement des données personnelles au moyen d'une clé.

Quelle que soit la méthode de protection des données personnelles, il est nécessaire de définir une méthode de gestion des droits d'accès à ces données, précisant notamment qui a accès à quelles données et dans quelles conditions.

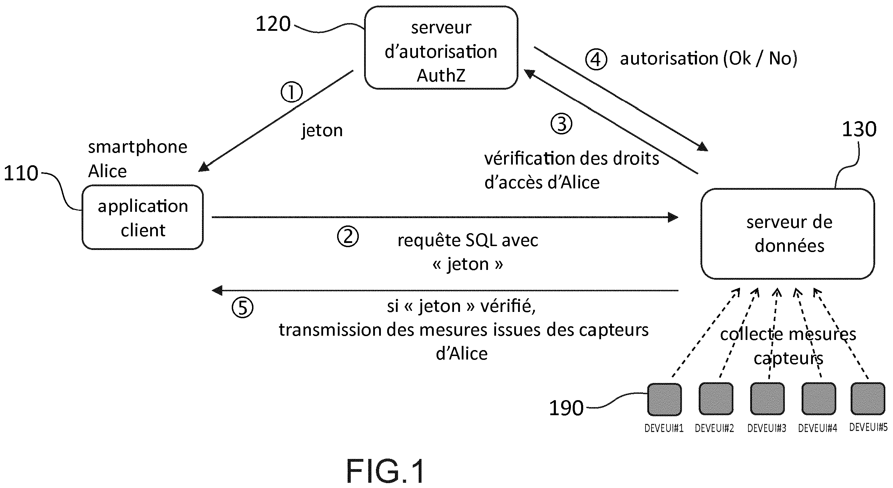

La gestion des droits d'accès dans un système IoT est généralement basée sur une version dérivée du protocole OAuth 2.0, représentée en Fig. 1.

On rappelle que le principe d'OAuth 2.0 est d'accorder à une application client un droit d'accès à des ressources disponibles sur un serveur de ressources, au moyen d'un jeton (*token*) matérialisant le droit d'accès en question.

Lorsqu'une application client, 110, (résidant par exemple dans le smartphone d'Alice) souhaite accéder à des ressources issues des capteurs 190 (typiquement des mesures issues de capteurs appartenant à Alice) et stockées dans la base de données d'un serveur de données 130, elle demande au serveur d'autorisation 120 un droit d'accès aux ressources en question. Si un profil d'utilisateur avec les droits d'accès correspondants a été préalablement créé dans le serveur d'autorisation (AuthZ), on accorde à ladite application l'accès aux ressources en question. Pour ce faire, le serveur d'autorisation génère à l'étape 1 un jeton d'accès et le transmet à l'application client. La validité du jeton d'accès peut dépendre d'éléments contextuels et est limitée dans le temps. L'utilisateur transmet ensuite à l'étape 2 une requête au serveur de données 130 en présentant son jeton d'accès. Le serveur de données 130 vérifie alors à l'étape 3 auprès du serveur d'autorisation 120 si l'utilisateur dispose bien des droits d'accès aux ressources demandées et, si c'est effectivement le cas, reçoit à l'étape 4 une autorisation de ce dernier. Le serveur de données répond alors favorablement à la requête de l'utilisateur et, à l'étape 5, transmet à l'application client les ressources demandées.

La solution représentée en Fig. 1 devient toutefois très complexe à utiliser dès lors qu'une politique agile de gestion de droits d'accès doit être mise en œuvre, en distinguant les utilisateurs sur la base de leur identité ou de leurs attributs contextuels, comme l'appartenance à un groupe, par exemple. Dans un tel cas, l'adjonction d'un utilisateur à un groupe ou le départ de ce groupe nécessite une révocation de la clé pour tous les membres de l'ancien groupe et la distribution d'une nouvelle clé de chiffrement à tous les membres du nouveau groupe. En outre, si un utilisateur appartient à plusieurs groupes, cela conduit à devoir chiffrer les mêmes données avec des clés différentes.

En outre, la solution représentée en Fig. 1 fait appel à un tiers de confiance centralisé, à savoir le serveur d'autorisation 120. Celui-ci est en charge de l'authentification des utilisateurs, de la vérification de leurs droits d'accès et de la délivrance des autorisations d'accès. Il s'agit donc d'un élément critique en termes de sécurité, potentiellement vulnérable en cas d'attaques, notamment d'attaques par déni de service.

L'article de G. Zyskind et al. intitulé « Decentralizing privacy : using blockchain to protect personal data », publié dans Security and Privacy Workshop (SPW), pp. 180-184, Mai 2015, propose de décentraliser la gestion des données personnelles à l'aide d'une chaine de blocs (blockchain). Les autorisations d'accès sont délivrées directement par le propriétaire des données et stockées dans la chaine de blocs au moyen d'une transaction (*T_{access}*). Les données sont stockées de manière chiffrée et distribuées dans les nœuds du réseau au moyen d'une table de hachage distribuée (DHT).

Cette solution, bien que ne requérant plus de tiers de confiance centralisé, ne permet pas une gestion déléguée des droits d'accès, ni une gestion agile de ces droits.

L'objet de la présente invention est par conséquent de proposer une méthode et un système de gestion de droits d'accès à des données personnelles qui ne nécessitent pas de recourir à un tiers de confiance centralisé, permettent une gestion agile et déléguée des droits d'accès, notamment lorsqu'il est nécessaire de gérer des groupes d'utilisateurs.

La publication de demande de brevet US 2018/060496 A1 décrit des technologies pour sécuriser l'accès flexible aux ressources d'informations de santé (HIR) contenues dans des systèmes de dossiers médicaux électroniques (EHR). En administrant les permissions d'accès avec des identités autonomes certifiées et des techniques de registres répartis, les HIR peuvent être sécurisées. Des patients et autres utilisateurs peuvent être inscrits pour accéder à un registre réparti, de type chaîne de blocs de soins, employé pour définir, héberger et adjuger des permissions pour accéder aux HIR. Des propriétaires autorisés et/ou patients disposant des droits à leurs propres HIR peuvent pouvoir attribuer des permissions d'accès fines et conditionnelles à des tiers. Des transferts d'informations et des transactions se produisant selon ces permissions peuvent être enregistrés dans des contrats intelligents incorporés dans la chaîne de blocs de soins.

### EXPOSÉ DE L'INVENTION

La présente invention est définie par une méthode d'accès à des données personnelles appartenant à un propriétaire de données, les droits d'accès d'un utilisateur à ces données pour un usage prédéterminé étant représentés par un jeton d'accès, dans laquelle :
(a) des jetons d'accès sont générés par un serveur de jetons d'accès conformément à des règles d'accès stockées dans une première base de données hébergée par ledit serveur, le jeton d'accès dudit utilisateur étant identifié par un identifiant de jeton et transmis, au moyen d'une première transaction, à un premier contrat intelligent stocké dans une chaine de blocs, le premier contrat intelligent enregistrant le jeton d'accès dans la chaine de blocs;
(b) un terminal dudit utilisateur transmet, au moyen d'une seconde transaction, une demande d'autorisation d'accès identifiée par un identifiant de demande d'autorisation, à un second contrat intelligent stocké dans la chaine de blocs, le second contrat intelligent interrogeant le premier contrat intelligent et obtenant le jeton d'accès en lui fournissant des éléments cryptographiques permettant d'authentifier l'utilisateur, puis déterminant si des conditions d'accès contenues dans le jeton sont bien remplies et, dans l'affirmative, enregistrant l'autorisation d'accès dans la chaine de blocs ;
(c) le terminal dudit utilisateur transmet une requête d'accès à un serveur de données, la requête d'accès comprenant ledit identifiant de demande d'autorisation, le serveur de données interrogeant le second contrat intelligent en lui fournissant ledit identifiant de demande d'autorisation, le second contrat intelligent retournant au serveur de données le jeton correspondant à cette demande si une autorisation d'accès correspondant à l'identifiant de la demande d'autorisation est bien enregistrée dans la chaine de blocs, le serveur de données lisant les données personnelles stockées, dans une seconde base de données personnelles à une URL spécifiée dans le jeton, et les transmettant au terminal dudit utilisateur.

Selon une variante, à l'étape (a), suite à l'émission de la première transaction, le serveur de jetons d'accès transmet une demande de consentement au terminal du propriétaire des données personnelles et celui-ci émet une troisième transaction à destination d'un troisième contrat intelligent stocké dans la chaine de blocs, la troisième transaction comprenant une première variable booléenne indiquant le consentement ou le refus du consentement du propriétaire des données à l'accès de ces données par ledit utilisateur.

La seconde transaction peut comprendre le règlement d'un montant en cryptomonnaie au propriétaire des données.

Lesdits éléments cryptographiques comprennent typiquement une clé publique de l'utilisateur ainsi qu'une adresse de portefeuille obtenue par hachage de ladite clé publique.

Préalablement à l'étape (b), l'identifiant de jeton est avantageusement transmis au terminal dudit utilisateur.

De préférence, à l'étape (b) la demande d'autorisation d'accès est enregistrée dans la chaine de blocs.

Le jeton d'accès comprend avantageusement un premier champ contenant l'identifiant de jeton, un deuxième champ contenant un identifiant de l'utilisateur, un troisième champ contenant un identifiant du propriétaire des données personnelles, un quatrième champ contenant l'URL où se trouvent les données personnelles et un cinquième champ contenant une empreinte numérique d'un ensemble de paramètres d'accès.

Dans ce cas, à l'étape (c), la requête d'accès transmise par le terminal dudit utilisateur comprend en outre ledit ensemble de paramètres d'accès et le serveur de données vérifie que l'empreinte numérique contenue dans le jeton d'accès correspond bien audit ensemble de paramètres d'accès avant de lire les données personnelles stockées et de les transmettre au dit utilisateur.

Le deuxième champ peut aussi comprendre une adresse de portefeuille de l'utilisateur ainsi qu'une clé publique de l'utilisateur et le troisième champ peut comprendre une adresse de portefeuille du propriétaire des données ainsi qu'une clé publique de ce dernier.

Le jeton d'accès peut posséder en outre un sixième champ contenant la date d'expiration dudit jeton.

Le jeton d'accès peut encore comprendre un septième champ contenant une variable booléenne indiquant si le propriétaire des données a donné son consentement.

Enfin, le jeton d'accès peut comprendre un huitième champ contenant une variable booléenne indiquant si un montant requis pour l'utilisation du jeton a bien été réglé.

Avantageusement, un quatrième contrat intelligent est stocké dans la chaine de blocs, ce quatrième contrat ayant pour fonction de tenir à jour une balance des comptes en cryptomonnaie de l'utilisateur, du propriétaire des données, du serveur de jetons d'accès et du serveur de données.

Selon une variante, à l'étape (c), les données personnelles lues dans la seconde base de données sont transmises au terminal dudit utilisateur via un canal sécurisé (247).

Le serveur de données peut effectuer un traitement sur les données personnelles avant de les transmettre au terminal dudit utilisateur.

L'invention est également définie par un système de gestion d'accès à des données personnelles comprenant un serveur de jetons d'accès hébergeant une première base de données contenant les profils d'accès de différents utilisateurs, un terminal d'un utilisateur, un serveur de données hébergeant une seconde base de données dans laquelle sont stockées lesdites données personnelles, le terminal dudit utilisateur étant connecté au serveur de données via un canal sécurisé, le serveur de jetons d'accès, le terminal dudit utilisateur et le serveur de données possédant chacun une interface leur permettant de communiquer avec une chaine de blocs;
ledit serveur de jetons d'accès étant configuré pour générer un jeton d'accès pour un utilisateur, conformément à des règles d'accès stockées dans la première base de données, et à transmettre ledit jeton, identifié par un identifiant de jeton, à un premier contrat intelligent stocké dans la chaine de blocs, au moyen d'une première transaction, le premier contrat intelligent enregistrant le jeton d'accès dans le registre distribué de la chaine de blocs;
le terminal dudit utilisateur étant configuré pour transmettre, au moyen d'une seconde transaction, une demande d'autorisation d'accès identifiée par un identifiant de demande d'autorisation, à un second contrat intelligent stocké dans la chaine de blocs, le second contrat intelligent interrogeant le premier contrat intelligent et obtenant le jeton d'accès en lui fournissant des éléments cryptographiques permettant d'authentifier l'utilisateur, puis déterminant si des conditions d'accès contenues dans le jeton sont bien remplies et, dans l'affirmative, enregistrant l'autorisation d'accès dans la chaine de blocs ;
le terminal dudit utilisateur étant en outre configuré pour transmettre une requête d'accès au serveur de données, la requête d'accès comprenant ledit identifiant de demande d'autorisation, le serveur de données interrogeant alors le second contrat intelligent en lui fournissant ledit identifiant de demande d'autorisation, le second contrat intelligeant retournant au serveur de données le jeton si une autorisation d'accès correspondant à l'identifiant de la demande d'autorisation est bien enregistrée dans la chaine de blocs ;
le serveur de données étant configuré pour lire les données personnelles stockées, dans la seconde base de données, à une URL spécifiée dans le jeton, et à transmettre les données personnelles au terminal dudit utilisateur via le canal sécurisé.

### BRÈVE DESCRIPTION DES DESSINS

D'autres caractéristiques et avantages de l'invention apparaîtront à la lecture d'un mode de réalisation préférentiel de l'invention, en référence aux figures jointes parmi lesquelles :
La Fig. 1, déjà décrite, représente de manière schématique une méthode de gestion des droits accès à des ressources d'un système IoT, connue de l'état de la technique ;
La Fig. 2 représente de manière schématique un système susceptible de mettre en œuvre une méthode de gestion de droits d'accès à des données personnelles selon la présente invention ;
Les Fig. 3A à 3C représentent de manière schématique les principales étapes d'une méthode de gestion des droits d'accès à des données personnelles selon un mode de réalisation de l'invention;
La Fig. 4 représente de manière schématique les interactions d'un contrat intelligent avec les éléments du système de la Fig. 2 lors des étapes mises en œuvre dans les Figs. 3A-3C ;
Les Figs. 5A et 5B représentent de manière schématique les messages et transactions échangés entre éléments du système de la Fig. 2 lors des étapes mises en œuvre dans les Figs. 3A-3C.

### EXPOSÉ DÉTAILLÉ DE MODES DE RÉALISATION PARTICULIERS

La présente invention concerne la gestion d'accès à des données personnelles et plus particulièrement des droits d'accès à ces données. Par données personnelles, on entend toute information se rapportant à une personne physique identifiée ou identifiable, directement ou indirectement. Ces données personnelles peuvent notamment provenir de dispositifs connectés (capteurs d'un réseau IoT) situés dans l'environnement de la personne physique (domicile par exemple).

Pour garantir la vie privée des personnes physiques et notamment des utilisateurs d'un réseau IoT, il est nécessaire de protéger l'accès à ces données personnelles. En d'autres termes, il ne doit pas être possible à un tiers de pouvoir avoir accès à ces données personnelles sans avoir préalablement obtenu l'autorisation de la personne physique correspondante. Cette personne physique sera désignée par la suite comme le propriétaire des données personnelles.

L'accès à ces données doit se conformer à un ensemble de règles d'accès (*policy*) préalablement définies. Ces règles d'accès ont pour objet de décrire qui peut accéder à quoi selon quelles conditions et, le cas échéant pour quelle utilisation et à quel coût. En particulier, différents utilisateurs pourront bénéficier d'autorisations d'accès différentes en fonction de différents cas d'usage et de leurs profils respectifs. Les règles d'accès des différents utilisateurs pourront être avantageusement décrites à l'aide d'un langage de balisage.

La présente invention s'appuie sur une architecture de réseau sans serveur de sécurité central, tel que le serveur d'autorisation d'accès connu de l'état de la technique. Le rôle du traditionnel serveur de sécurité est ici dévolu en partie à des contrats intelligents opérés par une chaine de blocs (*blockchain*)/un registre distribué (*ledger*).

On rappelle qu'une chaine de blocs se compose de blocs chainés au moyen d'un mécanisme cryptographique. Le chainage est obtenu en insérant le haché (*hash*) du bloc précédent dans le contenu du bloc courant. L'ajout de nouveaux blocs à la chaine est réalisé à intervalles réguliers. L'ajout d'un bloc à la chaine implique que son contenu ait été vérifié, ainsi que la création d'un « lien » reliant le bloc à la chaine. Ce lien est créé par une opération de « minage », actuellement une « preuve de travail » consistant par exemple à adjoindre au bloc un mot, telle que le hash du mot concaténé au bloc vérifie une contrainte prédéterminée.

La chaine de blocs forme un registre qui est distribué et répliqué dans les différents nœuds du réseau. Ces nœuds peuvent interagir avec la chaine de blocs et utiliser son contenu. L'intégrité des informations incluses dans les blocs de la chaine est garantie par des fonctions cryptographiques.

On considérera dans la suite une chaine de blocs capable de stocker non seulement des transactions (comme dans Bitcoin) mais aussi d'exécuter le code de contrats intelligents (*smart contracts*). Un exemple d'une telle chaine de blocs est Ethereum. Un contrat intelligent est
un code logiciel pouvant être stocké dans un bloc du registre distribué. Ce code logiciel peut être accédé à une adresse déterminée et peut comprendre une ou plusieurs fonctions. L'exécution d'une fonction du contrat intelligent peut être déclenchée par l'envoi d'une transaction émise depuis un portefeuille vers l'adresse du code en question, la transaction comprenant l'identification de la fonction à exécuter et les arguments attendus en entrée par cette fonction.

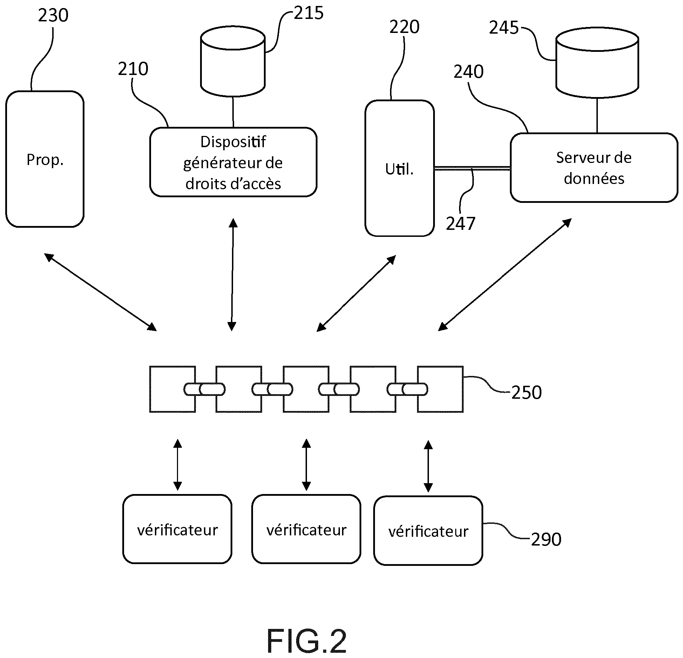

La Fig. 2 représente de manière schématique un système susceptible de mettre en œuvre une méthode de gestion de droits d'accès à des données personnelles selon la présente invention.

On a représenté en 210 un dispositif générateur de droits d'accès. Ce dispositif se présente sous la forme d'un serveur de jetons d'accès connecté à une première base de données 215 dans laquelle sont stockés les profils d'accès des différents utilisateurs. Le dispositif générateur des droits d'accès est chargé de la génération de jetons d'accès pour les utilisateurs disposant d'un profil d'accès dans la première base de données. Chaque jeton d'accès généré pour un utilisateur représente les droits d'accès de cet utilisateur, en conformité avec le profil d'accès correspondant. Le dispositif générateur de droits d'accès est chargé en outre de la mise à jour des profils d'accès des différents utilisateurs, en particulier de leur création, de leur modification ou de leur suppression.

Les profils d'accès doivent se conformer à des règles d'accès (*access policy*). Ces règles d'accès peuvent différer d'un usage à l'autre. Ainsi, par exemple, on pourra prévoir un premier ensemble de règles d'accès lorsque le propriétaire des données personnelles est lui-même utilisateur (autrement dit, dans ce cas, le propriétaire consulte ses propres données), un second ensemble de règles d'accès lorsque le propriétaire des données personnelles donne une possibilité d'accès à un seul type d'utilisateur, et un troisième ensemble de règles d'accès lorsque le propriétaire des données personnelles donne une ou plusieurs possibilités d'accès à différents utilisateurs. Lorsque le système met en œuvre plusieurs ensembles de règles d'accès, ces ensembles sont stockés dans une base de données, dite base de données de référence (non représentée).

Quelle que soit la variante envisagée, un utilisateur du système peut formuler une requête d'accès à des données personnelles au moyen d'un terminal 220, tel qu'un ordinateur, une tablette ou un smartphone. L'utilisateur peut être une personne physique ou bien un automate sous la forme d'un logiciel hébergé dans le terminal en question.

Le cas échéant, le système fait également intervenir le propriétaire des données personnelles qui pourra, au moyen d'un terminal 230, exprimer son consentement ou son refus de consentement, lorsque le profil d'accès d'un utilisateur requiert de recueillir le consentement du propriétaire des données. L'obtention du consentement ne sera pas nécessaire lorsque le propriétaire des données personnelles est tenu de consentir à l'accès en vertu d'une obligation légale ou réglementaire ou bien encore parce que l'utilisateur n'est autre que le propriétaire des données personnelles (consultation de ses propres données).

Une fois le jeton d'accès généré et, le cas échéant, le consentement du propriétaire des données obtenu, l'utilisateur peut se voir octroyer une autorisation d'accès selon un processus qui sera décrit plus loin. L'utilisateur ainsi autorisé adresse au serveur de données 240 une requête de consultation des données personnelles. Le serveur de données 240 dispose d'une seconde base de données 245 dans laquelle sont stockées les données personnelles. Le serveur de données fournit alors à l'utilisateur via un canal sécurisé 247 les données correspondant à l'autorisation qui lui a été octroyée. Comme nous le verrons plus loin, les différentes opérations telles que l'émission des droits d'accès, l'expression du consentement du propriétaire des données, la formulation d'une requête d'accès, l'octroi d'une autorisation d'accès font intervenir des contrats intelligents (voire un seul contrat intelligent regroupant l'ensemble de leurs fonctions respectives). Ces contrats intelligents sont stockés dans le registre distribué d'une chaine de blocs 250.

Chacun des éléments du système, à savoir le serveur de jetons d'accès, 210, le terminal de l'utilisateur, 220, le terminal du propriétaire des données personnelles, 230, et le serveur de données, 240, possède une interface lui permettant d'interagir avec la chaine de blocs 250.

La bonne exécution des contrats intelligents est vérifiée par des dispositifs vérificateurs, 290. Ces nœuds vérificateurs sont en pratique des nœuds disposant d'une copie complète du registre (*full nodes*). Les nœuds vérificateurs valident le résultat de cette exécution selon un mécanisme de consensus, par exemple au moyen d'une preuve de travail (*proofof work*), d'une preuve d'enjeu (*proof of stake*), voire d'une preuve d'autorité (*proof of authority*) si la chaine de blocs est privée.

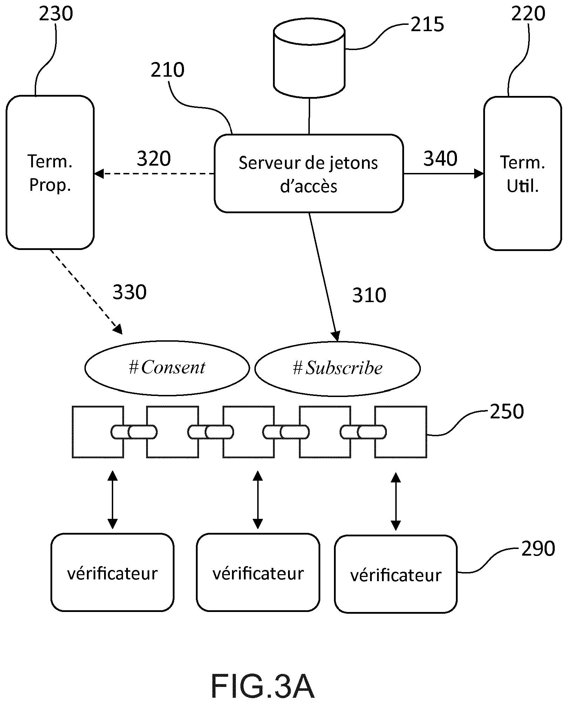

Les différentes étapes de la méthode de gestion d'accès seront décrites ci-après en relation avec les Figs. 3A à 3C.

La première étape représentée en Fig. 3A concerne la génération des droits d'accès des utilisateurs et leur enregistrement dans la chaine de blocs.

On suppose que les profils d'accès des différents utilisateurs ont été préalablement stockés dans la première base de données, 215. Les profils d'accès auront pu par exemple être saisis au moyen d'une interface GUI dans un format conforme aux règles d'accès. Le cas échéant, la première base de données peut contenir, pour un même utilisateur, plusieurs profils pour différentes règles d'accès de la base de données de référence.

Le dispositif générateur des droits d'accès (serveur de droits d'accès) génère des jetons (*tokens*) représentant les droits d'accès des différents utilisateurs aux ressources (données personnelles). Un jeton correspond à un utilisateur pour un usage prédéterminé. Il est défini par un ensemble structuré de données comprenant plusieurs champs et doit être conforme au profil d'accès spécifié dans la première base de données, 215.

Un premier champ contient un identifiant de jeton (par exemple un numéro tiré aléatoirement), *TokUID.*

Un deuxième champ contient l'identifiant de l'utilisateur (ou de l'automate, voire de l'objet connecté), propriétaire du jeton. Cet identifiant est en règle générale l'adresse de portefeuille de l'utilisateur. Toutefois, lorsque différents utilisateurs sont susceptibles d'avoir la même adresse de portefeuille (cas d'Ethereum où l'adresse de portefeuille ne comprend que 180 bits de l'empreinte (*hash* de 256 bits obtenu par SHA-256) de la clé publique obtenue), ce second champ pourra également comprendre la clé publique de l'utilisateur.

Un troisième champ contient l'identifiant du propriétaire des données personnelles. Ce troisième champ est facultatif et pourra être omis lorsque le propriétaire des données personnelles peut se déduire de manière univoque de l'identifiant de l'utilisateur. Comme précédemment, en cas de possible collision entre adresses de portefeuille, le troisième champ pourra également comprendre la clé publique du propriétaire des données.

Un quatrième champ comprend l'URL où se trouvent les données personnelles pour lesquelles le jeton donne l'accès. Il pointe vers une page ou une ressource où se trouvent les données, par exemple une page ou un fichier du serveur de données.

Un cinquième champ comprend une empreinte (hash) d'un ensemble de paramètres d'accès concaténés : un identifiant de la source de données, un identifiant de la règle d'accès et du cas d'usage autorisé sous cette règle d'accès. Cette empreinte caractérise l'accès autorisé ;

Un sixième champ, facultatif, donne la date d'expiration du jeton. Le cas échéant, ce champ pourra également indiquer si le jeton a été révoqué (variable booléenne)

Un septième champ, facultatif, indique si le propriétaire des données a donné son consentement pour l'usage auquel le jeton est destiné (variable booléenne).

Un huitième champ, facultatif, indique si le montant éventuel associé à l'utilisation du jeton a bien été réglé.

L'ordre des différents champs peut bien entendu différer d'une implémentation à l'autre. D'autres champs pourront également être envisagés par l'homme du métier sans sortir pour autant du cadre de la présente invention.

A titre d'exemple, on trouvera ci-après une déclaration de structure de jeton d'accès pour chaine de blocs Ethereum, en langage Solidity :

```
 struct Token {
 uint256 hash; // devid+Iot+usage pol
 string locdata; // URL
 address owner; // data owner
 bytes32 publickeyowner; // public key owner
 address user; // token owner/data user
 bytes32 publickeyuser; // public key user
 uint expire; // expiration date
 bool revoked; // validity
 bool consent; // consent from owner
 }
 mapping(uint128 => Token) public tokens;
```

On reconnait successivement dans cette déclaration, l'empreinte caractéristique de l'accès autorisé, l'URL du serveur de données, l'adresse de portefeuille du propriétaire des données, la clé publique de ce propriétaire, l'adresse de portefeuille de l'utilisateur, la date d'expiration du jeton, le statut de validité du jeton, le statut du consentement du propriétaire des données.

Le dispositif générateur de droits d'accès dispose d'une adresse de portefeuille (encore dénommée adresse de compte dans Ethereum) @ *walletTokserver* à partir de laquelle il peut émettre des transactions vers la chaine de blocs. Cette adresse de portefeuille est obtenue par hachage de sa clé publique au moyen d'une fonction de hachage (telle que SHA-256 par exemple).

A l'étape 310, le serveur de jetons d'accès (autrement dit le dispositif générateur de droits d'accès) transmet une première transaction à destination d'un premier contrat intelligent (*#Subscribe*), stocké dans la chaine de blocs à une adresse de compte prédéterminée. Cette transaction a pour argument un jeton d'accès au format précité. Ce jeton peut avoir été préalablement initialisé en indiquant que le consentement du propriétaire n'a pas (encore) été donné.

Le serveur de droits d'accès, fait appel à une fonction particulière du contrat *#Subscribe* qui contient un script de verrouillage (*scriptLockPolicy#n* où *n* indexe le cas d'usage) associé au cas d'usage considéré. Ce script de verrouillage enregistre le jeton dans le registre distribué de la chaine de blocs.

Le propriétaire des données personnelles peut être amené à fournir son consentement à la consultation des données personnelles, soit hors chaine de blocs (par exemple au moyen d'un contrat de mandat signé par les parties), soit par l'intermédiaire de la chaine de blocs. Le consentement accordé à un utilisateur est généralement lié à un profil d'accès particulier.

Lorsque le consentement doit être recueilli par l'intermédiaire de la chaine de blocs, le serveur de jetons d'accès transmet une demande de consentement au propriétaire des données en 320. Le propriétaire donne son consentement en transmettant en 330, à partir de son adresse de portefeuille (ou adresse de compte), *@ walletOwner,* une transaction (dénommée ci-après troisième transaction) à destination d'un contrat intelligent (dénommé troisième contrat intelligent, *#Consent*) stocké dans la chaine de blocs. Après identification du propriétaire, ladite troisième transaction modifie l'état de la variable booléenne *Consent* exprimant le consentement de la valeur FALSE à la valeur TRUE si le propriétaire des données personnelles autorise l'accès. La troisième transaction comprend comme argument la clé publique du propriétaire des données, un nonce, la valeur de la variable *Consent* (FALSE ou TRUE) et une signature numérique de la transaction au moyen de la clé privée du propriétaire des données. Le nonce peut être un numéro d'ordre de transaction et a pour objet d'éviter les attaques par rejeu. Ledit troisième contrat peut vérifier à l'aide de cette signature numérique que le consentement émane bien du propriétaire des données avant d'inscrire la valeur logique du consentement dans la chaine de blocs.

Dans tous les cas, le générateur de droits d'accès 210 notifie ensuite (notification hors chaine de blocs) à l'utilisateur en 340 qu'un jeton à son intention a été créé et stocké dans la chaine de blocs et lui communique l'identifiant du jeton ainsi créé, *TokUID .*

L'utilisateur est alors en mesure de consulter le registre distribué de la chaine de blocs pour y lire, à partir de son adresse de portefeuille (@ *walletUser*), le jeton ainsi stocké.

Le générateur de droits d'accès et le contrat intelligent *#Subscribe* permettent d'enregistrer et de gérer les inscriptions des droits d'accès des différents utilisateurs de manière agile, assurant ainsi la capacité de faire évoluer l'accès aux données personnelles.

La bonne exécution des contrats intelligents *#Subscribe* et *#Consent ,* l'enregistrement du jeton et, le cas échéant, du consentement du propriétaire des données personnelles, sont vérifiés et validés par les nœuds vérificateurs, 290, sur la base du mécanisme de consensus précité.

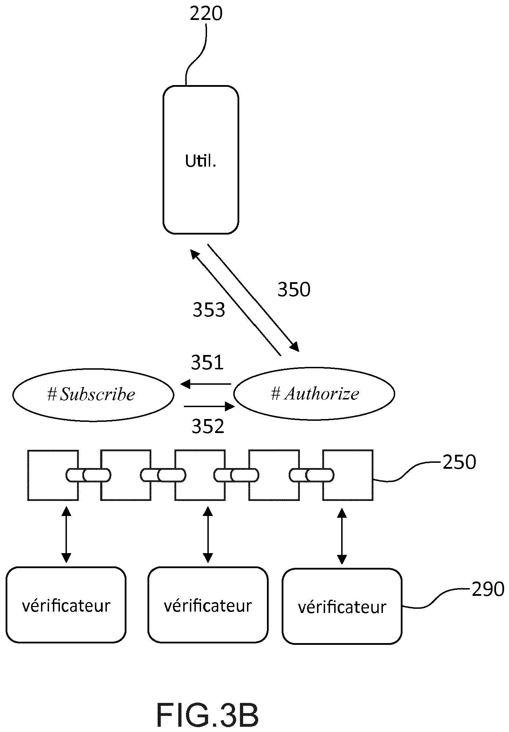

La seconde étape, représentée en Fig. 3B, concerne l'émission par l'utilisateur d'une demande d'autorisation accès aux données personnelles et l'autorisation qui lui est octroyée en retour, le cas échéant.

L'utilisateur souhaitant obtenir une autorisation d'accès aux données personnelles du propriétaire émet, en 350, une transaction (dénommée ci-après deuxième transaction), à partir de l'adresse de portefeuille @ *walletUser* et à destination d'un second contrat intelligent (*#Authorize*) stocké dans la chaine de blocs. Cette transaction est identifiée par un identifiant de demande d'autorisation d'accès sous la forme d'un numéro d'ordre, *IdReq # p*, généré par l'utilisateur.

La deuxième transaction a pour argument la clé publique de l'utilisateur (*PublicKey*), l'identifiant de la requête d'autorisation accès (*IdReq#p*), l'identifiant du jeton (*TοkUID*), et une signature numérique de la transaction (*SigNum*) au moyen de la clé privée de l'utilisateur. Par signature numérique, on entend un élément cryptographique permettant de vérifier que l'auteur de la transaction est bien celui identifié par la clé publique. A titre d'exemple, lorsque la chaine de blocs est Ethereum, la signature numérique peut être fournie par la fonction *sign* .

La deuxième transaction fait appel à une fonction particulière du contrat intelligent *#Authorize,* jouant le rôle de script de déverrouillage (*scriptUnlockPolicy#n* où *n* indexe le cas d'usage) correspondant au script de verrouillage dans le contrat # *Subscribe.*

Le script de déverrouillage appelle en 351 le premier contrat intelligent, *#Subscribe,* en lui fournissant en argument, l'identifiant du jeton, *TokUID*. A l'aide de cet identifiant, le contrat intelligent *#Subscribe* retrouve le jeton et le transmet en 352 au contrat intelligent *#Authorize* . Le script de déverrouillage utilise les éléments cryptographiques fournis par l'utilisateur, à savoir l'adresse publique de l'utilisateur, *PublicKey* , ainsi que la signature numérique de la transaction, *SigNum* , pour déverrouiller le jeton.

Si les éléments cryptographiques correspondent bien à ceux indiqués dans le script de verrouillage, le jeton est déverrouillé et, s'il est encore valide (si la date indiquée dans le sixième champ du jeton est bien postérieure à la date d'utilisation), une autorisation d'accès (*AuthZ*) est stockée en relation avec son identifiant (*IdReq#p*) dans le registre distribué de la chaine de blocs. L'autorisation d'accès contient l'identifiant du jeton pour laquelle elle a été accordée (*TοkUID*). L'autorisation d'accès comprend le cas échéant les paramètres de validité de cette autorisation : durée de validité, nombre maximal de consultations, etc.

En revanche, si les éléments cryptographiques ne correspondent pas à ceux attendus ou si le jeton est périmé, aucune autorisation d'accès n'est stockée dans le registre distribué de la chaine de blocs. Le cas échéant, la deuxième transaction comportera le versement d'un montant en cryptomonnaie pour rémunérer le service d'accès et/ou le propriétaire des données personnelles. Le règlement du prix pourra constituer une condition à remplir pour l'obtention de l'autorisation.

L'utilisateur est en mesure de consulter le registre distribué et de déterminer si une autorisation d'accès lui a été accordée ou non et à quelles conditions. Plus précisément, il pourra lire le statut de l'autorisation d'accès dans le registre en relation avec l'identifiant *IdReq#p.*

Là encore, la bonne exécution des contrats intelligents *#Authorize* et *#Subscribe,* le déverrouillage du jeton, les conditions de l'usage, le paiement du prix requis, l'enregistrement de l'autorisation d'accès sont vérifiés et validés par les nœuds vérificateurs, 290, sur la base du mécanisme de consensus précité.

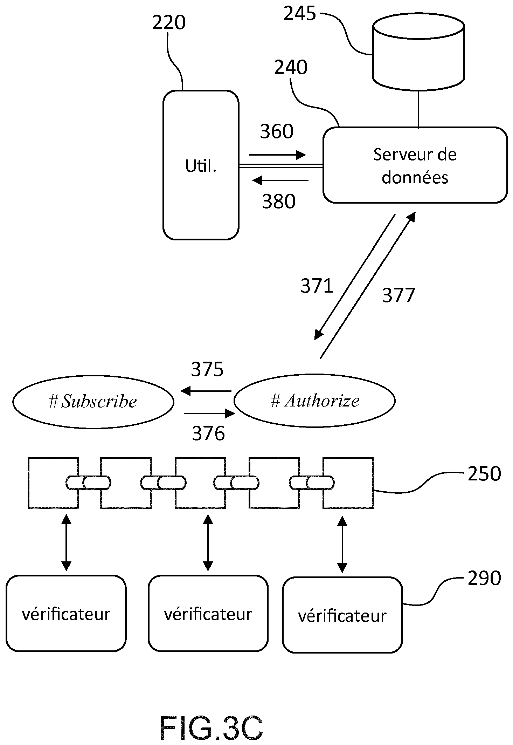

La troisième étape, représentée en Fig. 3C, concerne l'accès proprement dit aux données personnelles par l'utilisateur.

L'utilisateur transmet en 360, au moyen de son terminal 220, une requête d'accès aux données personnelles à destination du serveur de données, 240, via le canal sécurisé, 247. Cette requête comprend l'identifiant de la requête d'autorisation d'accès, *IdReq # p,* ainsi que les paramètres de l'accès demandé (identifiant de la source de données, identifiant de la règle d'accès et du cas d'usage autorisé). Il convient de noter que les paramètres de l'accès sont en clair car ils ne divulguent rien des données personnelles elles-mêmes.

Le serveur de données interroge alors le deuxième contrat intelligent *#Authorize* en lui fournissant l'identifiant de requête d'autorisation d'accès, *IdReq#p* en 371. Le contrat *#Authorize* vérifie qu'une autorisation d'accès correspondant au numéro a bien été octroyée à l'utilisateur et, dans l'affirmative, interroge en 375 le premier contrat intelligent *#Subscribe* en lui transmettant l'identifiant de jeton (*TοkUID*) et obtient en retour, 376, le jeton correspondant. Le contrat *#Authorize* retourne, en 377, le jeton en question au serveur de données.

Le serveur de données vérifie (au moyen de la fonction de hachage) que l'empreinte caractéristique figurant dans le jeton correspond bien aux paramètres d'accès contenus dans la requête d'accès et, dans l'affirmative, extrait les données personnelles de la seconde base de données 245 à l'URL spécifiée dans le jeton. Les données dans la base de données peuvent être stockées sous forme chiffrée ou en clair. Lorsqu'elles sont chiffrées, les clés de chiffrement peuvent être stockées dans un coffre-fort numérique (« *secure element* »). Le serveur d'accès peut accéder au coffre-fort et lire la clé de chiffrement appropriée pour déchiffrer les données à l'adresse spécifiée par le pointeur de lecture.

Le cas échéant, si plusieurs adresses sont spécifiées, les données personnelles lues peuvent être agrégées par le serveur de données, préalablement à leur transmission. De manière générale, le serveur peut effectuer un traitement sur les données ainsi lues avant de les transmettre à l'utilisateur.

A l'étape 380, le serveur de données transmet à l'utilisateur, via le canal sécurisé, les données personnelles extraites, après les avoir agrégées, si nécessaire.

L'homme du métier comprendra que le déroulement des étapes précédemment décrites et en particulier, le changement d'état des variables du ou des contrat(s), l'enregistrement et l'autorisation d'accès peuvent être vérifiés à tout instant, par n'importe quel nœud disposant d'une copie complète de la chaîne. La validation est réalisée par les nœuds vérificateurs selon le mécanisme de consensus précité, sans qu'il soit besoin de faire appel à un tiers de confiance centralisé.

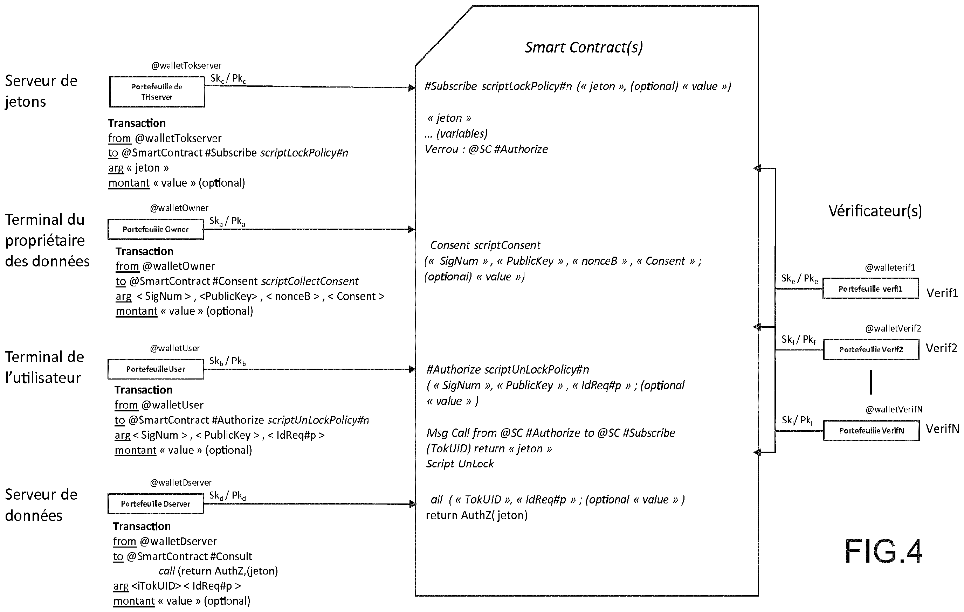

La Fig. 4 représente de manière schématique les interactions d'un contrat intelligent avec les dispositifs du système de la Fig. 2 lors des étapes mises en œuvre dans les Figs. 3A-3C.

On a représenté à gauche de la figure les différents dispositifs du système, à savoir le serveur de jetons d'accès, 210, le terminal du propriétaire des données, 230, le terminal de l'utilisateur, 220, et le serveur de données, 240.

On a représenté au centre de la figure, les contrats intelligents stockés dans la chaine de blocs, à savoir *#Subscribe*, *#Consent*, *#Authorize*. Alternativement, *#Subscribe, #Consent, #Authorize* peuvent être des fonctions regroupées au sein d'un même contrat.

A droite de la figure ont été représentés les nœuds vérificateurs chargés de vérifier notamment l'exécution du code des contrats intelligents et de miner les blocs.

Le serveur de jetons possède une adresse de portefeuille (encore dénommée adresse de compte dans Ethereum), @ *walletTokserver,* à partir de laquelle il peut émettre des transactions vers la chaine de blocs, en particulier la première transaction à destination du premier contrat intelligent *#Subscribe* . Plus précisément, cette première transaction est envoyée au script de verrouillage *scriptLockPolicy#n* de ce contrat, avec pour argument le jeton d'accès et, le cas échéant, un montant en cryptomonnaie si une rémunération (par exemple du propriétaire des données ou du serveur de données) est prévue.

Le terminal du propriétaire des données possède une adresse de portefeuille, @ *walletOwner,* à partir de laquelle il peut émettre des transactions vers la chaine de blocs, en particulier la troisième transaction à destination du contrat intelligent, #*Consent*, contenant un script *scriptCollectConsent.* Cette transaction a pour arguments la clé publique correspondant à l'adresse de portefeuille précitée, *PublicKey,* un nonce *NonceB* pour éviter les attaques par rejeu, la valeur booléenne exprimant le consentement *Consent,* ainsi que la signature numérique *SigNum* de la transaction au moyen de la clé privée associée à l'adresse publique du portefeuille, @ *walletOwner.*

Le terminal de l'utilisateur possède une adresse de portefeuille, @ *walletUser,* à partir de laquelle il peut émettre des transactions vers la chaine de blocs, en particulier la deuxième transaction à destination du deuxième contrat intelligent, *# Authorize*. Cette transaction a pour argument la clé publique de l'utilisateur, *PublicKey*, l'identifiant de la requête d'autorisation d'accès, *IdReq* # *p*, et une signature numérique de la transaction *SigNum* au moyen de la clé privée associée à l'adresse de portefeuille @ *walletUser .*

Enfin, le serveur de données possède lui-même une adresse de portefeuille, @ *walletDserver,* à partir de laquelle il peut émettre des transactions vers la chaine de blocs. Il peut notamment interroger à partir de son adresse de portefeuille le deuxième contrat intelligent en lui transmettant comme argument l'identifiant de la demande d'autorisation d'accès, *IdReq#p*. Il reçoit en retour si l'autorisation d'accès a bien été accordée, et le cas échéant si le consentement du propriétaire de données a bien été a bien été octroyé, le jeton d'accès de l'utilisateur.

Selon une variante, les versements éventuels en cryptomonnaie peuvent être gérés par un contrat intelligent spécifique qui tient à jour un livre des comptes des différents éléments du système. Par exemple si la chaine de blocs est Ethereum, ce contrat spécifique peut être un contrat de token ERC-20, (désigné par (dénommé *#TokenERC*20).

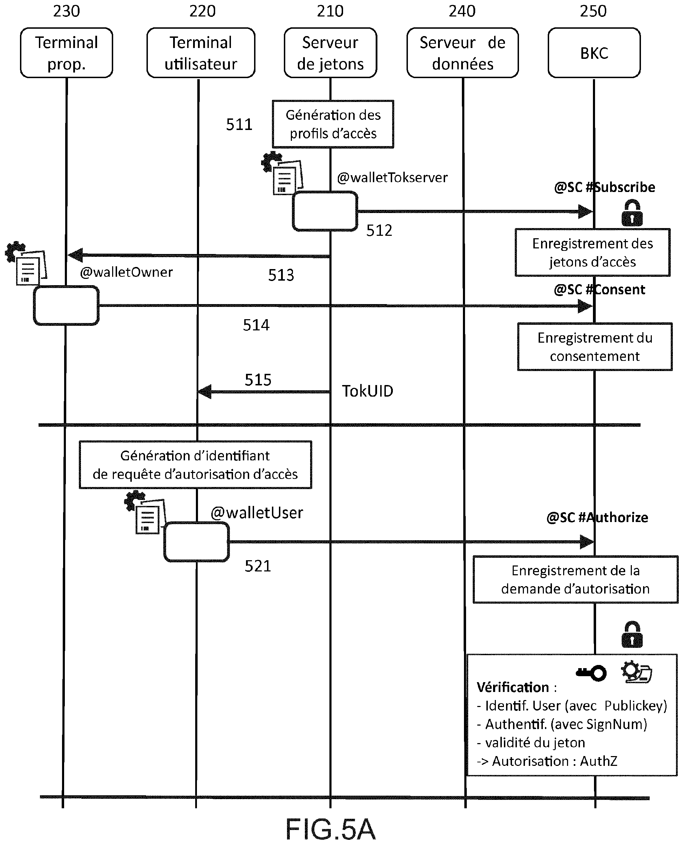

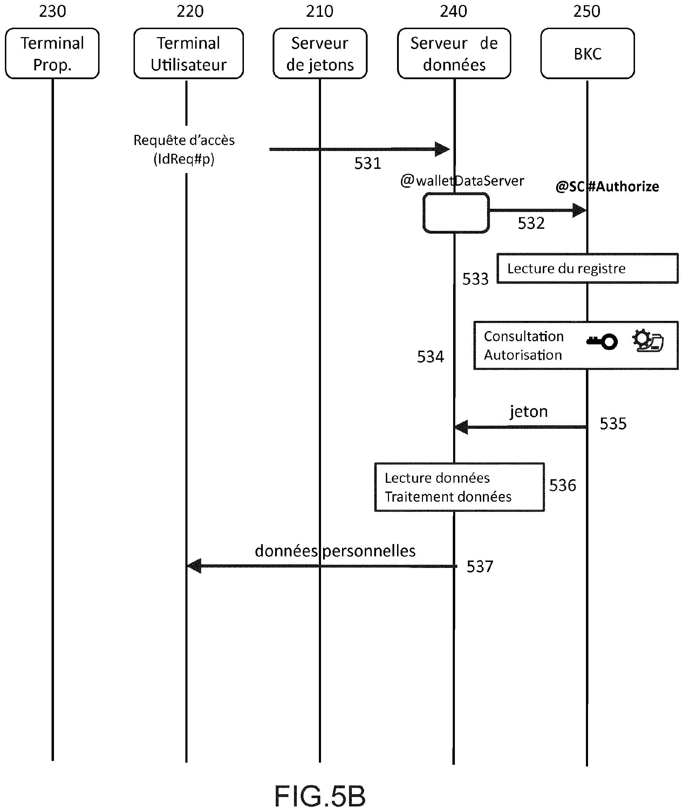

Les Figs. 5A-5B illustrent de manière schématique l'échange de messages, transactions et consultations entre éléments du système de la Fig. 2 lors des étapes mises en œuvre dans les Figs. 3A-3C.

On a représenté selon des colonnes les différents acteurs du système de gestion d'accès : le terminal du propriétaire des données personnelles, 230, le terminal utilisateur, 220, le serveur de droits d'accès (serveur de jetons d'accès), 210, le serveur de données, 240, et la chaine de blocs, 250, support de l'exécution des contrats intelligents #Subscribe, #Consent, #Authorize, *#TokenERC20.*

A la sous-étape 511, les profils d'accès des différents utilisateurs sont saisis sous la forme de fiches électroniques, via un GUI par exemple. Ces profils d'accès sont conformes à des règles d'accès (*access policy*) préalablement stockées dans la base données de référence en fonction des usages. Les profils des utilisateurs sont en lecture seule. Le cas échéant, les propriétaires de données personnelles peuvent disposer de profils d'accès à la fois en lecture et en écriture. Dans des systèmes d'accès à des données personnelles générées par des capteurs connectés (loT), les capteurs peuvent disposer de profils en écriture seulement. En tout état de cause, les différents utilisateurs doivent pouvoir être identifiés et authentifiés par le serveur d'accès avant de pouvoir accéder à la seconde base de données.

A la sous-étape 512, le serveur de jetons d'accès génère, à partir de son adresse de portefeuille, @ *walletTokserver*, un jeton pour l'utilisateur à l'adresse *scriptLockPolicy#n* du script de verrouillage du premier contrat intelligent, #Subscribe. Le jeton d'accès de l'utilisateur est stocké par le script de verrouillage dans le registre distribué, pour l'usage #n.

Optionnellement, à la sous-étape 514, le propriétaire des données personnelles donne son consentement d'accès à ses données en transmettant une (troisième) transaction au second contrat intelligent #Consent. Il fournit au contrat des éléments cryptographiques permettant de l'identifier (sa clé publique) et de l'authentifier (signature numérique de la transaction), ainsi qu'une variable logique exprimant consentement (ou son refus).

Le serveur de jetons d'accès notifie en 515 à l'utilisateur qu'un droit d'accès a été créé en sa faveur et lui transmet le jeton en question, *TokUID .*

La seconde étape concerne une demande d'autorisation d'accès de la part de l'utilisateur.

L'utilisateur souhaitant accéder aux données personnelles du propriétaire soumet une demande d'autorisation d'accès au deuxième contrat intelligent, #Authorize en 521. Cette requête est enregistrée dans le registre distribué. Le contrat en question délivre une autorisation d'accès après avoir authentifié l'auteur de la requête et avoir vérifié la validité de son jeton d'accès et, le cas échéant, le consentement du propriétaire des données. Pour ce faire, il exécute un script de déverrouillage délivrant l'autorisation d'accès si l'identité de l'utilisateur (@ *walletUser*) est légitime, s'il est bien le propriétaire du jeton et que le jeton d'accès est valide. Dans le cas où le consentement du propriétaire est requis, le script de déverrouillage vérifie également si le consentement est bien inscrit dans le registre distribué. Si la vérification est concluante, le script de déverrouillage fournit une autorisation d'accès (AuthZ) selon la règle d'accès # *n*. A défaut, l'autorisation est refusée et aucune autorisation n'est enregistrée dans la chaine de blocs.

La troisième étape concerne la demande d'accès de l'utilisateur au serveur de données.

L'utilisateur transmet en 531 au serveur de données, via le canal sécurisé, une requête d'accès ayant pour arguments l'identifiant de la demande d'autorisation d'accès, *IdReq #p*, et les paramètres de l'accès demandé (identifiant de la source de données, un identifiant de la règle d'accès et du cas d'usage autorisé sous cette règle d'accès).

Le serveur de données interroge alors le deuxième contrat intelligent *#Authorize* en lui transmettant en 532, à partir de son adresse de portefeuille, *@walletDataServer,* une transaction comprenant l'identifiant de la requête d'autorisation d'accès, *IdReq # p.* Ce contrat intelligent vérifie que l'autorisation est bien enregistrée en 533 et, dans l'affirmative, consulte en 534 le premier contrat #Subscribe pour récupérer le jeton correspondant à l'identifiant (*TοkUID*) figurant dans l'autorisation d'accès. Le jeton est ensuite renvoyé au serveur de données en 535 et le serveur vérifie que l'empreinte caractéristique qu'il contient correspond bien aux paramètres figurant dans la requête d'accès.

Le serveur de données lit ensuite en 536 les données personnelles stockées dans la seconde base de données, en suivant l'URL spécifiée dans le jeton.

Le cas échéant, le serveur effectue un traitement sur les données ainsi lues. Par exemple, il peut agréger des données provenant d'enregistrements différents. Il peut aussi n'être autorisé qu'à traiter ou divulguer qu'une partie des données lues (accédées), le traitement étant défini par l'usage figurant dans le jeton précédemment obtenu de la chaine de blocs.

Les données ainsi lues et, le cas échéant traitée, sont transmises à l'utilisateur en 537, via le canal sécurisé.

## Revendications

1. Méthode d'accès à des données personnelles appartenant à un propriétaire de données (230), les droits d'accès d'un utilisateur à ces données pour un usage prédéterminé étant représentés par un jeton d'accès, dans laquelle
(a) des jetons d'accès sont générés par un serveur de jetons d'accès (210) conformément à des règles d'accès stockées dans une première base de données hébergée par ledit serveur, le jeton d'accès dudit utilisateur étant identifié par un identifiant de jeton et transmis (310,512), au moyen d'une première transaction, à un premier contrat intelligent stocké dans une chaine de blocs, le premier contrat intelligent enregistrant le jeton d'accès dans la chaine de blocs ;
(b) un terminal (220) dudit utilisateur transmet, au moyen d'une seconde transaction, une demande d'autorisation d'accès (350,521) identifiée par un identifiant de demande d'autorisation, à un second contrat intelligent stocké dans la chaine de blocs, le second contrat intelligent interrogeant (351) le premier contrat intelligent et obtenant le jeton d'accès (352) en lui fournissant des éléments cryptographiques permettant d'authentifier l'utilisateur, puis déterminant si des conditions d'accès contenues dans le jeton sont bien remplies et, dans l'affirmative, enregistrant l'autorisation d'accès dans la chaine de blocs ;
(c) le terminal dudit utilisateur transmet une requête d'accès à un serveur de données (220), la requête d'accès comprenant ledit identifiant de demande d'autorisation, le serveur de données interrogeant (371) le second contrat intelligent en lui fournissant ledit identifiant de demande d'autorisation, le second contrat intelligent retournant (377) au serveur de données le jeton correspondant à cette demande si une autorisation d'accès correspondant à l'identifiant de la demande d'autorisation est bien enregistrée dans la chaine de blocs, le serveur de données lisant les données personnelles stockées, dans une seconde base de données personnelles (245) à une URL spécifiée dans le jeton, et les transmettant au terminal dudit utilisateur.

2. Méthode de gestion d'accès à des données personnelles selon la revendication 1, dans laquelle à l'étape (a), suite à l'émission de la première transaction, le serveur de jetons d'accès transmet une demande de consentement (320, 513) au terminal du propriétaire des données personnelles et que celui-ci émet (330, 514) une troisième transaction à destination d'un troisième contrat intelligent stocké dans la chaine de blocs, la troisième transaction comprenant une première variable booléenne indiquant le consentement ou le refus du consentement du propriétaire des données à l'accès de ces données par ledit utilisateur.

3. Méthode de gestion d'accès à des données personnelles selon la revendication 1 ou dans laquelle a seconde transaction comprend le règlement d'un montant en cryptomonnaie au propriétaire des données.

4. Méthode de gestion d'accès à des données personnelles selon l'une des revendications précédentes, dans laquelle esdits éléments cryptographiques comprennent une clé publique de l'utilisateur ainsi qu'une adresse de portefeuille obtenue par hachage de ladite clé publique.

5. Méthode de gestion d'accès à des données personnelles selon l'une des revendications précédentes, dans laquelle préalablement à l'étape (b), l'identifiant de jeton est transmis au terminal dudit utilisateur (515).

6. Méthode de gestion d'accès à des données personnelles selon l'une des revendications précédentes, dans laquelle à 'étape (b) la demande d'autorisation d'accès est enregistrée dans la chaine de blocs.

7. Méthode de gestion d'accès à des données personnelles selon l'une des revendications précédentes, dans laquelle le jeton d'accès possède un premier champ contenant l'identifiant de jeton, un deuxième champ contenant un identifiant de l'utilisateur, un troisième champ contenant un identifiant du propriétaire des données personnelles, un quatrième champ contenant l'URL où se trouvent les données personnelles et un cinquième champ contenant une empreinte numérique d'un ensemble de paramètres d'accès.

8. Méthode de gestion d'accès à des données personnelles selon la revendication 7, dans laquelle à l'étape (c) la requête d'accès transmise par le terminal dudit utilisateur comprend en outre ledit ensemble de paramètres d'accès et que le serveur de données vérifie que l'empreinte numérique contenue dans le jeton d'accès correspond bien audit ensemble de paramètres d'accès avant de lire les données personnelles stockées et de les transmettre au dit utilisateur.

9. Méthode de gestion d'accès à des données personnelles selon la revendication 7 ou 8, dans laquelle le deuxième champ comprend une adresse de portefeuille de l'utilisateur ainsi qu'une clé publique de l'utilisateur et que le troisième champ comprend une adresse de portefeuille du propriétaire des données ainsi qu'une clé publique de ce dernier.

10. Méthode de gestion d'accès à des données personnelles selon l'une des revendications 7 à 9, dans laquelle le jeton d'accès possède un sixième champ contenant la date d'expiration dudit jeton.

11. Méthode de gestion d'accès à des données personnelles selon l'une des revendications 7 à 10, dans laquelle le jeton d'accès possède un septième champ contenant une variable booléenne indiquant si le propriétaire des données a donné son consentement.

12. Méthode de gestion d'accès à des données personnelles selon l'une des revendications 7 à 11, dans laquelle le jeton d'accès possède un huitième champ contenant une variable booléenne indiquant si un montant requis pour l'utilisation du jeton a bien été réglé.

13. Méthode de gestion d'accès à des données personnelles selon l'une des revendications précédentes, dans laquelle un quatrième contrat intelligent est stocké dans la chaine de blocs, ce quatrième contrat ayant pour fonction de tenir à jour une balance des comptes en cryptomonnaie de l'utilisateur, du propriétaire des données, du serveur de jetons d'accès et du serveur de données.

14. Méthode de gestion d'accès à des données personnelles selon l'une des revendications précédentes, dans laquelle à l'étape (c), les données personnelles lues dans la seconde base de données sont transmises au terminal dudit utilisateur via un canal sécurisé (247).

15. Méthode de gestion d'accès à des données personnelles selon la revendication 14, dans laquelle le serveur de données effectue un traitement sur les données personnelles avant de les transmettre au terminal dudit utilisateur.

16. Système de gestion d'accès à des données personnelles comprenant un serveur de jetons d'accès (210) hébergeant une première base de données (215) contenant les profils d'accès de différents utilisateurs, un terminal d'un utilisateur (220), un serveur de données (240) hébergeant une seconde base de données dans laquelle sont stockées lesdites données personnelles, le terminal dudit utilisateur étant connecté au serveur de données via un canal sécurisé (247), le serveur de jetons d'accès, le terminal dudit utilisateur et le serveur de données possédant chacun une interface leur permettant de communiquer avec une chaine de blocs (250) ;
ledit serveur de jetons d'accès (210) étant configuré pour générer un jeton d'accès pour un utilisateur, conformément à des règles d'accès stockées dans la première base de données, et à transmettre (310,512) ledit jeton, identifié par un identifiant de jeton, à un premier contrat intelligent stocké dans la chaine de blocs, au moyen d'une première transaction, le premier contrat intelligent enregistrant le jeton d'accès dans le registre distribué de la chaine de blocs;
le terminal (220) dudit utilisateur étant configuré pour transmettre, au moyen d'une seconde transaction, une demande d'autorisation d'accès (350,521) identifiée par un identifiant de demande d'autorisation, à un second contrat intelligent stocké dans la chaine de blocs, le second contrat intelligent interrogeant (351) le premier contrat intelligent et obtenant le jeton d'accès (352) en lui fournissant des éléments cryptographiques permettant d'authentifier l'utilisateur, puis déterminant si des conditions d'accès contenues dans le jeton sont bien remplies et, dans l'affirmative, enregistrant l'autorisation d'accès dans la chaine de blocs ;
le terminal dudit utilisateur étant en outre configuré pour transmettre une requête d'accès au serveur de données (220), la requête d'accès comprenant ledit identifiant de demande d'autorisation, le serveur de données interrogeant (377) alors le second contrat intelligent en lui fournissant ledit identifiant de demande d'autorisation, le second contrat intelligeant retournant (377) au serveur de données le jeton si une autorisation d'accès correspondant à l'identifiant de la demande d'autorisation est bien enregistrée dans la chaine de blocs ;
le serveur de données étant configuré pour lire les données personnelles stockées, dans la seconde base de données (245), à une URL spécifiée dans le jeton, et à transmettre les données personnelles au terminal dudit utilisateur via le canal sécurisé.

## Patentansprüche

1. Verfahren zum Zugriff auf persönliche Daten, die einem Eigentümer von Daten (230) gehören, wobei die Zugriffsrechte eines Benutzers auf diese Daten für eine vorbestimmte Benutzung durch ein Zugriffstoken repräsentiert werden, in dem:
(a) Zugriffstoken durch einen Zugriffstokenserver (210) in Übereinstimmung mit Zugriffsregeln generiert werden, die in einer ersten Datenbank gespeichert sind, die durch den Server gehostet wird, wobei das Zugriffstoken des Benutzers durch einen Tokenidentifikator identifiziert wird und mit Hilfe einer ersten Transaktion an einen ersten intelligenten Vertrag übertragen wird (310, 512), der in einer Blockchain gespeichert ist, wobei der erste intelligente Vertrag das Zugriffstoken in der Blockchain speichert;
(b) ein Endgerät (220) des Benutzers mit Hilfe einer zweiten Transaktion eine Zugriffsberechtigungsanfrage (350, 251), die durch einen Berechtigungsanfrageidentifikator identifiziert wird, an einen zweiten intelligenten Vertrag überträgt, der in der Blockchain gespeichert ist, wobei der zweite intelligente Vertrag den ersten intelligenten Vertrag befragt (351) und das Zugriffstoken erhält (352), wobei er ihm kryptographische Elemente liefert, die die Authentifizierung des Benutzers ermöglichen, dann bestimmt, ob Zugriffsbedingungen, die in dem Token enthalten sind, erfüllt sind, und im Fall der Bestätigung die Zugriffsberechtigung in der Blockchain speichert;
(c) das Endgerät des Benutzers eine Zugriffsanfrage an einen Datenserver (220) überträgt, wobei die Zugriffsanfrage den Berechtigungsanfrageidentifikator umfasst, wobei der Datenserver den zweiten intelligenten Vertrag befragt (371), wobei er ihm den Berechtigungsanfrageidentifikator liefert, wobei der zweite intelligente Vertrag an den Datenserver das Token entsprechend dieser Anfrage zurück schickt (377), wenn eine Zugriffsberechtigung entsprechend dem Berechtigungsanfrageidentifikator in der Blockchain gespeichert ist, wobei der Datenserver die persönlichen Daten liest, die in einer zweiten Bank von persönlichen Daten gespeichert sind (245), mit einer URL, die in dem Token spezifiziert ist, und sie an das Endgerät des Benutzers überträgt.

2. Verfahren zur Verwaltung des Zugriffs auf persönliche Daten nach Anspruch 1, wobei im Schritt (a) im Anschluss an die Aussendung der ersten Transaktion der Zugriffstokenserver eine Zustimmungsanfrage (320, 513) an das Endgerät des Eigentümers der persönlichen Daten überträgt und dieses eine dritte Transaktion mit Ziel eines dritten intelligenten Vertrags aussendet (330, 514), der in der Blockchain gespeichert ist, wobei die dritte Transaktion eine erste boolesche Variable umfasst, die die Zustimmung oder die Verweigerung der Zustimmung des Eigentümers der Daten zum Zugriff auf diese Daten durch den Benutzer angibt.

3. Verfahren zur Verwaltung des Zugriffs auf persönliche Daten nach Anspruch 1 oder 2, wobei die zweite Transaktion die Begleichung eines Betrags in Kryptogeld an den Eigentümer der Daten umfasst.

4. Verfahren zur Verwaltung des Zugriffs auf persönliche Daten nach einem der vorhergehenden Ansprüche, wobei die kryptographischen Elemente einen öffentlichen Schlüssel des Benutzers sowie eine Portfolioadresse umfassen, erhalten durch eine Hashverarbeitung des öffentlichen Schlüssels.

5. Verfahren zur Verwaltung des Zugriffs auf persönliche Daten nach einem der vorhergehenden Ansprüche, wobei vor dem Schritt (b) der Tokenidentifikator an das Endgerät des Benutzers übertragen wird (515).

6. Verfahren zur Verwaltung des Zugriffs auf persönliche Daten nach einem der vorhergehenden Ansprüche, wobei im Schritt (b) die Zugriffsberechtigungsanfrage in der Blockchain gespeichert wird.

7. Verfahren zur Verwaltung des Zugriffs auf persönliche Daten nach einem der vorhergehenden Ansprüche, wobei das Zugriffstoken ein erstes Feld besitzt, das den Tokenidentifikator enthält, ein zweites Feld, das einen Identifikator des Benutzers enthält, ein drittes Feld, das einen Identifikator des Eigentümers der persönlichen Daten enthält, ein viertes Feld, das die URL enthält, wo sich die persönlichen Daten befinden, und ein fünftes Feld, das einen digitalen Abdruck einer Gesamtheit von Zugriffsparametern enthält.

8. Verfahren zur Verwaltung des Zugriffs auf persönliche Daten nach Anspruch 7, wobei im Schritt (c) die Zugriffsanfrage, die durch das Endgerät des Benutzers übertragen wird, ferner die Gesamtheit von Zugriffsparametern umfasst, und der Datenserver überprüft, dass der digitale Abdruck, der in dem Zugriffstoken enthalten ist, der Gesamtheit von Zugriffsparametern entspricht, bevor er die gespeicherten persönlichen Daten liest und sie an den Benutzer überträgt.

9. Verfahren zur Verwaltung des Zugriffs auf persönliche Daten nach Anspruch 7 oder 8, wobei das zweite Feld eine Portfolioadresse des Benutzers sowie einen öffentlichen Schlüssel des Benutzers umfasst, und das dritte Feld eine Portfolioadresse des Eigentümers der Daten sowie einen öffentlichen Schlüssel dieses letztgenannten umfasst.

10. Verfahren zur Verwaltung des Zugriffs auf persönliche Daten nach einem der Ansprüche 7 bis 9, wobei das Zugriffstoken ein sechstes Feld besitzt, das das Ablaufdatum des Tokens enthält.

11. Verfahren zur Verwaltung des Zugriffs auf persönliche Daten nach einem der Ansprüche 7 bis 10, wobei das Zugriffstoken ein siebtes Feld besitzt, das eine boolesche Variable enthält, die angibt, ob der Eigentümer der Daten seine Zustimmung erteilt hat.

12. Verfahren zur Verwaltung des Zugriffs auf persönliche Daten nach einem der Ansprüche 7 bis 11, wobei das Zugriffstoken ein achtes Feld besitzt, das eine boolesche Variable enthält, die angibt, ob ein Betrag, der für die Benutzung des Tokens erforderlich ist, beglichen worden ist.

13. Verfahren zur Verwaltung des Zugriffs auf persönliche Daten nach einem der vorhergehenden Ansprüche, wobei ein vierter intelligenter Vertrag in der Blockchain gespeichert ist, wobei dieser vierte Vertrag die Funktion hat, eine Bilanz der Kryptogeldkonten des Benutzers, des Eigentümers der Daten, des Zugriffstokenservers und des Datenservers aktuell zu halten.

14. Verfahren zur Verwaltung des Zugriffs auf persönliche Daten nach einem der vorhergehenden Ansprüche, wobei im Schritt (c) die in der zweiten Datenbank gelesenen persönlichen Daten über einen gesicherten Kanal an das Endgerät des Benutzers übertragen werden (247).

15. Verfahren zur Verwaltung des Zugriffs auf persönliche Daten nach Anspruch 14, wobei der Datenserver eine Verarbeitung auf den persönlichen Daten durchführt, bevor er sie an das Endgerät des Benutzers überträgt.

16. System zur Verwaltung des Zugriffs auf persönliche Daten, umfassend einen Zugriffstokenserver (210), der eine erste Datenbank (215) hostet, die die Zugriffsprofile von verschiedenen Benutzern enthält, ein Endgerät eines Benutzers (220), einen Datenserver (240), der eine zweite Datenbank hostet, in der die persönlichen Daten gespeichert sind, wobei das Endgerät des Benutzers mit dem Datenserver über einen gesicherten Kanal (247) verbunden ist, wobei der Zugriffstokenserver, das Endgerät des Benutzers und der Datenserver jeweils eine Schnittstelle besitzen, die es ihnen ermöglicht, mit einer Blockchain (250) zu kommunizieren;
wobei der Zugriffstokenserver (210) derart konfiguriert ist, ein Zugriffstoken für einen Benutzer in Übereinstimmung mit Zugriffsregeln zu generieren, die in der ersten Datenbank gespeichert sind, und das Token, identifiziert mittels eines Tokenidentifikators, an einen ersten intelligenten Vertrag, der in der Blockchain gespeichert ist, mit Hilfe einer ersten Transaktion zu übertragen (310, 512), wobei der erste intelligente Vertrag das Zugriffstoken in dem verteilten Register der Blockchain speichert;
wobei das Endgerät (220) des Benutzers derart konfiguriert ist, mit Hilfe einer zweiten Transaktion eine Zugriffsberechtigungsanfrage, identifiziert durch einen Berechtigungsanfrageidentifikator, an einen zweiten intelligenten Vertrag zu übertragen (350, 521), der in der Blockchain gespeichert ist, wobei der zweite intelligente Vertrag den ersten intelligenten Vertrag befragt (351) und das Zugriffstoken erhält (352), wobei er ihm kryptographische Elemente liefert, die eine Authentifizierung des Benutzers ermöglichen, dann bestimmt, ob Zugriffsbedingungen erfüllt sind, die in dem Token enthalten sind, und im Fall der Bestätigung die Zugriffsberechtigung in der Blockchain speichert;
wobei das Endgerät des Benutzers ferner derart konfiguriert ist, eine Zugriffsanfrage an den Datenserver zu übertragen (220), wobei die Zugriffsanfrage den Berechtigunganfrageidentifikator umfasst, wobei der Datenserver dann den zweiten intelligenten Vertrag befragt (377), wobei er ihm den Berechtigungsanfrageidentifikator liefert, wobei der zweite intelligente Vertrag an den Datenserver das Token zurückschickt (377), wenn eine Zugriffsberechtigung entsprechend dem Identifikator der Berechtigungsanfrage in der Blockchain gespeichert ist;
wobei der Datenserver derart konfiguriert ist, die persönlichen Daten zu lesen, die in der zweiten Datenbank (245) bei einer in dem Token spezifizierten URL gespeichert sind, und die persönlichen Daten über den gesicherten Kanal an das Endgerät des Benutzers zu übertragen.

## Claims

1. A method for accessing personal data belonging to a data owner (230), the access policy of a user to these data for a predetermined use being represented by an access token, wherein
(a) access tokens are generated by an access token server (210) in accordance with access rules stored in a first database hosted by said server, the access token of said user being identified by a token identifier and transmitted (310, 512), by means of a first transaction, to a first smart contract stored in a blockchain, the first smart contract recording the access token in the blockchain;
(b) a terminal (220) of said user transmits, by means of a second transaction, an access authorisation request (350, 521) identified by an authorisation request identifier, to a second smart contract stored in the blockchain, the second smart contract querying (351) the first smart contract and obtaining the access token (352) by providing it with cryptographic elements for authenticating the user, and then determining whether access conditions contained in the token are fulfilled and, if yes, recording the access authorisation into the blockchain;
(c) the terminal of said user transmits an access request to a data server (220), the access request comprising said authorisation request identifier, the data server querying (371) the second smart contract by providing it with said authorisation request identifier, the second smart contract returning (377) to the data server the token corresponding to this request if an access authorisation corresponding to the identifier of the authorisation request is actually recorded in the blockchain, the data server reading personal data stored, in a second personal database (245) at a URL specified in the token, and transmitting them to the terminal of said user.

2. A method for managing access to personal data according to claim 1, wherein in step (a), as a result of emitting the first transaction, the access token server transmits a consent request (320, 513) to the terminal of the personal data owner and the latter emits (330, 514) a third transaction towards a third smart contract stored in the blockchain, the third transaction comprising a first Boolean variable indicating the consent or refusal of consent of the data owner to said user accessing these data.

3. The method for managing access to personal data according to claim 1 or 2, wherein a second transaction comprises settling a cryptocurrency amount to the data owner.

4. The method for managing access to personal data according to one of the previous claims, wherein said cryptographic elements comprise a public key of the user as well as a wallet address obtained by hashing said public key.

5. The method for managing access to personal data according to one of the previous claims, wherein, prior to step (b), the token identifier is transmitted to the terminal of said user (515).

6. The method for managing access to personal data according to one of the previous claims, wherein in step (b) the access authorisation request is recorded in the blockchain.

7. The method for managing access to personal data according to one of the previous claims, wherein the access token has a first field containing the token identifier, a second field containing an identifier of the user, a third field containing an identifier of the personal data owner, a fourth field containing the URL where personal data are located, and a fifth field containing a digital fingerprint of a set of access parameters.

8. The method for managing access to personal data according to claim 7, wherein in step (c) the access request transmitted by the terminal of said user further comprises said set of access parameters and the data server verifies that the digital fingerprint contained in the access token actually corresponds to said set of access parameters before reading the stored personal data and transmitting them to said user.

9. The method for managing access to personal data according to claim 7 or 8, wherein the second field comprises a wallet address of the user as well as a public key of the user and the third field comprises a wallet address of the data owner as well as a public key of the latter.

10. The method for managing access to personal data according to one of claims 7 to 9, wherein the access token has a sixth field containing the expiry date of said token.

11. The method for managing access to personal data according to one of claims 7 to 10, wherein the access token has a seventh field containing a Boolean variable indicating whether the data owner has given his/her consent.

12. The method for managing access to personal data according to one of claims 7 to 11, wherein the access token has an eighth field containing a Boolean variable indicating whether an amount required for the use of the token has been actually settled.

13. The method for managing access to personal data according to one of the previous claims, wherein a fourth smart contract is stored in the blockchain, this fourth contract having the function of keeping updated a balance of cryptocurrency payments of the user, the data owner, the access token server and the data server.

14. The method for managing access to personal data according to one of the previous claims, wherein in step (c), personal data read in the second database are transmitted to the terminal of said user via a secure channel (247).

15. The method for managing access to personal data according to claim 14, wherein the data server performs processing on personal data before transmitting them to the terminal of said user.

16. A system for managing access to personal data comprising an access token server (210) hosting a first database (215) containing access profiles of different users, a terminal (220) of a user, a data server (240) hosting a second database in which said personal data are stored, the terminal of said user being connected to the data server via a secure channel (247), the access token server, the terminal of said user and the data server each having an interface enabling them to communicate with a blockchain (250);
said access token server (210) being configured to generate an access token for a user, in accordance with access policy stored in the first database, and to transmit (310, 512) said token, identified by a token identifier, to a first smart contract stored in the blockchain, by means of a first transaction, the first smart contract recording the access token in the ledger of the blockchain;
the terminal (220) of said user being configured to transmit, by means of a second transaction, an access authorisation request (350, 521) identified by an authorisation request identifier, to a second smart contract stored in the blockchain, the second smart contract querying (351) the first smart contract and obtaining the access token (352) by providing it with cryptographic elements for authenticating the user, and then determining whether access conditions contained in the token are fulfilled and, if yes, recording the access authorisation into the blockchain;
the terminal of said user being further configured to transmit an access request to the data server (220), the access request comprising said authorisation request identifier, the data server then querying (377) the second smart contract by providing it with the authorisation request identifier, the second smart contract returning (377) to the data server the token if an access authorisation corresponding to the identifier of the authorisation request is actually recorded in the blockchain;
the data server being configured to read the personal data stored, in the second database (245) at a URL specified in the token, and to transmit the personal data to the terminal of said user via the secure channel.
